# EUROPÄISCHE PATENTANMELDUNG

(11) **EP 1 329 373 A2**
(43) Veröffentlichungstag der Anmeldung: **23.07.2003**
(21) Anmeldenummer: 02000556.7
(22) Anmeldetag: 10.01.2002
(51) Int. Cl.: B62D 25/04, B62D 29/00

(54) **Rahmen für eine Fahrzeugkarosserie und Verfahren zur Herstellung eines Rahmens für eine Fahrzeugkarosserie**

(71) Anmelder: Ford Global Technologies, Inc., A subsidiary of Ford Motor Company, Dearborn, Michigan 48126 (US)
(72) Erfinder: Stadtler, Arnold, 50935 Köln (DE); Porschen, Peter, 50170 Kerpen (DE); Baumann, Matthias, 52070 Aachen (DE); Sweeney, Kevin Eugene, 52072 Aachen (DE)
(74) Vertreter: Drömer, Hans-Carsten, Dr.-Ing.

(57) **Zusammenfassung**

Die Erfindung betrifft einen Rahmen für eine Fahrzeugkarosserie, der auf einer Bodengruppe der Fahrzeugkarosserie aufgesetzt ist und auf jeder Seite in einer mit der Fahrtrichtung übereinstimmenden X-Richtung hintereinander angeordnet und die Dachkonstruktion tragend zwei oder mehr Stützsäulen aufweist. Diese Stützsäulen sind dabei aus Profilen hergestellt.

Die bekannten Profile sind meist tiefgezogen oder in Fahrzeugquerrichtung extrudiert. Dies führt zu aufwendigen Einzelkonstruktionen, die für jede der Säulen des Fahrzeugs separat ausgelegt und konstruiert werden müssen. Die Erfindung soll das vermeiden. Hierzu weist die Stützsäule einen tragenden Grundkörper auf, der von einem oder mehreren, im Extrusionsverfahren hergestellten Rohprofilen gebildet ist. Durch die Extrusion in X-Richtung weist das Rohprofil eine konstante Querschnittsform auf und kann leicht in großen Mengen hergestellt werden. Durch Verwendung von Gleichteilen können zusätzlich Kosten gespart werden.

## Beschreibung

Die Erfindung betrifft einen Rahmen für eine Fahrzeugkarosserie, der auf einer Bodengruppe der Fahrzeugkarosserie aufgesetzt ist und auf jeder Seite in mit der Fahrtrichtung übereinstimmenden X-Richtung hintereinander angeordnet und die Dachkonstruktion tragend zwei oder mehr Stützsäulen aufweist, wobei die Stützsäulen einen aus Rohprofilen hergestellten, tragenden Grundkörper aufweisen.

Rahmen für eine Fahrzeugkarosserie dieser Art sind bekannt aus der EP 0 861 766. Derartige Rahmen werden üblicherweise von einer Bodengruppe sowie einem Dachelement gebildet, die über Stützsäulen miteinander verbunden sind. Die Säulen werden in der Regel im Tiefziehverfahren produziert, wobei bereits in der Mitte die Trennebene liegt und zwei äußere Säulenteile aufeinandergesetzt sind, die dann miteinander verschweißt werden. Auf diese Weise bildet sich ein formstabiler Grundkörper der Säule.

Der bekannte Rahmen weist daneben auch Grundkörper auf, die im Extrusionsverfahren hergestellt sind. Bei Großserienfertigung kann statt eines Tiefziehprozesses der Grundkörper der Säule aus Rohprofil hergestellt werden, die beispielsweise im Aluminium- oder Magnesium-Druckguss-Verfahren hergestellt werden können. Die bekannten Stützsäulen, die im Extrusionsverfahren hergestellt werden, werden aus großflächigen Profilen herausgeschnitten und mit der Bodengruppe sowie der Dachgruppe verbunden. Durch das Ausschneiden der Rohprofile aus den großflächigen Profilen ergibt sich eine umlaufende Kontur, die seitlich abgedeckt werden muss, wobei bei den bekannten Stützsäulen die seitliche Abdeckung im Bereich der vorderen bzw. hinteren Stimseite der Stützsäulen angeordnet ist.

Während die aus tiefgezogenen Einzelprofilen zusammengesetzten Stützsäulen den Nachteil aufweisen, daß sie verhältnismäßig viele einzelne Arbeitsschritte erfordern, weisen die extrudierten Stützsäulen den Nachteil auf, daß sie als verhältnismäßig große Einzelteile im Extrusionsverfahren hergestellt werden müssen. Dies erfordert sehr hohe Werkzeug- und Maschinenkosten, was die Herstellung dieser Stützsäulen nur für einige wenige Spezialanfertigungen lohnenswert macht.

Aufgabe der Erfindung ist es daher, einen Rahmen für eine Fahrzeugkarosserie zu schaffen, dessen Stützsäulen einfach und kostengünstig herstellbar sind. Eine weitere Aufgabe der Erfindung besteht darin, ein Verfahren zur Herstellung eines derartigen Rahmens bereit zu stellen.

Diese Aufgabe wird nach der Erfindung mit den Merkmalen des Patentanspruches 1 gelöst. Indem zumindest einer der Grundkörper von im Extrusionsverfahren hergestellten Rohprofilen gebildet ist, die so angeordnet sind, daß sie vorwiegend in X-Richtung eine konstante Querschnittsform aufweisen, kann ein sich nach oben verjüngender Querschnitt der Stützsäule und/oder eine Krümmung der Stützsäule in Fahrzeugquerrichtung durch das in x-Richtung orientierte Rohprofil ohne weiter Verformung erzeugt werden.

Vorwiegend X-Richtung bedeutet in diesem Zusammenhang, daß bei der erfindungsgemäßen Ausgestaltung der Stützsäulen die Extrusionsrichtung des Rohprofiles so angeordnet ist, daß sie im wesentlichen mit der X-Richtung des Fahrzeuges übereinstimmt. Dies führt dazu, daß die offenen Bereiche der Rohprofile zunächst in Fahrtrichtung bzw. in die entgegengesetzte Richtung angeordnet sind. Diese offenen Bereiche können nun mit Abdeckelementen verschlossen werden, so daß sich eine rundum geschlossene Stützsäule bildet, wobei die Abdeckelemente mit den Rändern des Rohprofiles verbunden werden. Beide Elemente können beispielsweise aus einem metallischen Material gefertigt sein, so daß die Verbindung durch eine Schweißverbindung hergestellt werden kann.

Durch die besondere Anordnung der Extrusionsrichtung in vorwiegend X-Richtung kann nun besonders leicht ein großflächiges Profil genutzt werden, um eine Vielzahl von einzelnen Stützsäulen herzustellen. Besonders vorteilhaft ist es dabei, wenn die Stützsäulen mehrteilig mit mehreren, übereinander angeordneten Säulenelementen ausgebildet sind. Bei einer bevorzugten Ausgestaltung weist eine solche Stützsäule beispielsweise ein unteres und ein oberes Säulenelement auf.

Üblicherweise weist ein Fahrzeug drei Stützsäulen auf, nämlich eine A-, eine B- und eine C-Säule. Diese Säulen können unter vorteilhafter Ausnutzung der Erfindung jeweils zweiteilig ausgebildet sein, wobei sie von einer unteren A-, B- oder C-Säule und einer oberen A-, B- oder C-Säule gebildet sind. Die unteren und die oberen Säulenelemente sind bevorzugt über formschlüssige Verbindungen ineinander gesteckt und anschließend zusätzlich verschweißt. Diese formschlüssigen Verbindungen lassen sich durch die Extrusion in X-Richtung besonders leicht herstellen, da hier lediglich in der Extrusionsdüse eine entsprechende Formgebung notwendig ist, damit ein Zapfen sowie eine nutartige korrespondierende Gegenfläche in die gegenüberliegenden Stirnseiten der beiden Säulenelemente eingebracht werden kann.

Bevorzugt weist die B-Säule ein unteres Säulenelement auf, das in seiner Form mit der gegenüberliegenden B-Säule identisch ist. Gleiches gilt für die A-Säule. Lediglich im Bereich der C-Säule wird es aufgrund der üblicherweise komplexeren Geometrie zur Bildung des Radkastens und dessen Verbindung mit der C-Säule nicht möglich sein, eine gleiche Kontur auf beiden Seiten vorzusehen. Auf diese Weise können die unteren Säulenelemente der A- und der B-Säule aus gleichen Bauteilen gefertigt werden, und zusätzlich können die rechten und die linken Säulen die gleichen, um 180° gedrehten Geometrien aufweisen. Diese Vereinheitlichung der einzelnen Säulenelemente reduziert die Anzahl der Teile zum Aufbau der Karosserie erheblich, was zu einer deutlichen Kosteneinsparung führt.

Durch die besondere Extrusionsrichtung liegen nun die Seitenflächen der Rohelemente im Bereich der Fahrzeuginnen- bzw. der Fahrzeugaußenseite. Dies ermöglicht es, besonders einfach wiederum durch Formgebung des Extrusionswerkzeuges Hinterschneidungen und Hohlräume oder Kammem vorzusehen, die als Funktionselemente der Stützsäulen genutzt werden können.

Bei einer bevorzugten Ausgestaltung der Erfindung ist beispielsweise in der inneren Seite des unteren Säulenelements der B-Säule eine Hinterschneidung vorgesehen, die eine Aufnahme für den Sicherheitsgurt abdeckt. Zur Montage der Stützsäule wird zunächst der Sicherheitsgurt in das extrudierte Rohprofil eingelegt und befestigt, anschließend kann das vordere bzw. hintere Abdeckelement auf die Stützsäule aufgesetzt werden. Hierdurch ergibt sich auf elegante Weise eine verdeckte und gegen Beschädigung geschützte Abdeckung der Gurtmechanik, ohne daß hier besondere Kosten in Kauf genommen werden müssten.

Auch Verstärkungssicken oder Befestigungsmöglichkeiten für Anbauteile, beispielsweise Innenraumverkleidungen oder Sicherheitsnetze können auf diese Weise leicht in die Stützsäulen eingebracht werden. Dabei kann das Fahrzeug, dessen Karosserie auf diese Weise aufgebaut wird, nicht nur ein PKW, sondern auch ein Lastkraftwagen oder auch ein sonstiges Fahrzeug sein, selbst im Luftfahrzeugbau können derartige Stützelemente vorgesehen werden. Die vorderen und hinteren Abdeckelemente können wesentlich die Ästhetik der Stützsäulen prägen. Zum Einen decken sie eventuelle formschlüssige Verbindungselemente ab, so daß sie für den Betrachter unsichtbar bleiben, und zum Anderen können sie auf einfache Weise zum Gegenstand von attraktiven Formvariationen gemacht werden.

Bei einer besonderen Ausgestaltung der Erfindung ist beispielsweise ein Teil des Abdeckelementes transparent oder auch durchsichtig ausgebildet, so daß eine im Inneren des Säulenelementes angeordnete Lampe den außerhalb des Säulenelementes angeordneten Bereich zu beleuchten vermag. Im Falle einer PKW-Karosserie kann auf diese Weise eine Türinnenbeleuchtung erzielt werden, und zwar nicht nur auf die bekannte herkömmliche Weise mit einem spotartigen Beleuchten der Einstiegsfläche, sondern es ist auch leicht und einfach möglich, die gesamte in der Türfüllung angeordnete Säulenfläche mit einem umlaufenden Lichtstreifen zu versehen.

Durch die Verwendung hochwertiger Materialien bzw. Beschichtungen für die Abdeckelemente kann ein besonders hoher Qualitätseindruck erzielt werden. Gleichzeitig kann bei einer Serienproduktion auf diese Weise eine Modellvielfalt realisiert werden, in dem je nach Ausrichtung des Modells oder preislicher Positionierung des jeweiligen Modells eine andere Form des Abdeckelementes gewählt wird. So kann beispielsweise bei einem sportlichen Fahrzeug das Abdeckelement aus einem gebürsteten Aluminium bestehen, während es für ein eher komfortabel ausgelegtes Modell aus einem in Wagenfarbe lackierten Blech bestehen kann.

Im Inneren der Säulenelemente können bevorzugt Hohlräume oder Kammern angeordnet sein, die ebenfalls leicht im Extrusionsverfahren herstellbar sind. Diese Hohlräume können zur Versteifung der Säulengeometrie genutzt werden, insbesondere können sie mit weiteren Materialien, etwa einem Verstärkungsschaum gefüllt werden. Dies führt nicht nur zu einer weiteren Versteifung der Karosserie, sondern auch zu einem erhöhten Qualitätseindruck, da über den Schaum Schallisolationen möglich werden.

Die neuen Elemente werden bevorzugt aus einem metallischen Werkstoff, insbesondere aus Aluminium-Druckguss oder aus einem Magnesium-Druckguss gefertigt. Aus diesem Grund bietet sich die erfindungsgemäße Konstruktion besonders für Aluminiumrahmenkonstruktionen an, es ist jedoch auch möglich, diese Konstruktion für andere Materialien zu nutzen. Selbst eine Kunststoffsäule kann bei Verwendung eines faserverstärkten Kunststoffes möglich werden. In diesem Fall kann ein Kurzfaser verstärkter Kunststoff eingesetzt werden, der leicht und preisgünstig ohne große Maschinenkosten in der erforderlichen Größe extrudiert werden kann.

Die Abdeckelemente können mit weiteren Bauteilen versehen sein, insbesondere können sie einen in X-Richtung bzw. in die entgegengesetzte Richtung hervorspringenden Rand aufweisen, der als zusätzliche Dichtfläche dient und so die eigentliche Türfüllung bildet. An diesem Rand kann dann die Türe mit ihrer Dichtung anliegen und so eine geschlossene Karosserie bilden. Die hervorspringenden Bereiche können besonders leicht und einfach optisch genutzt werden, indem beispielsweise hier die transparenten Bereiche angeordnet sind, so daß eine effektive Ausleuchtung der Türfüllung möglich wird.

Die erfindungsgemäßen Stützsäulen werden aus großflächigen Profilen hergestellt. Diese können zunächst tragflügelartig extrudiert werden, um anschließend in Streifen geschnitten zu werden, die der Dicke des Säulenelementes entsprechen. Diese Streifen werden dann mit den Abdeckelementen versehen; sofern in die Säulenelemente weitere Funktionsbauteile integriert sind, werden diese selbstverständlich vorher eingesetzt. Die Abdeckelemente können auch lösbar mit den Rohprofilen verbunden sein, zu diesem Zweck können die Rohprofile im Inneren so ausgebildet sein, daß sie eine Bohrung zur Aufnahme eines Innengewindes aufweisen. In dieses Innengewinde können dann Schrauben zur Befestigung der Abdeckelemente eingeschraubt werden.

Die so aufgebauten Säulenelemente bilden dann entweder bereits die gesamte Stützsäule oder werden dann zur Bildung der jeweiligen Stützsäule ineinander gesteckt.

Hierbei ist besonders günstig, wenn mehrere Säulen gleiche Bauteilformen nutzen, um die Teilevielfalt reduzieren zu können.

Weitere Merkmale und Vorteile der Erfindung ergeben sich aus den Unteransprüchen und aus der nachfolgenden Beschreibung bevorzugter Ausführungsbeispiele anhand der Zeichnungen.

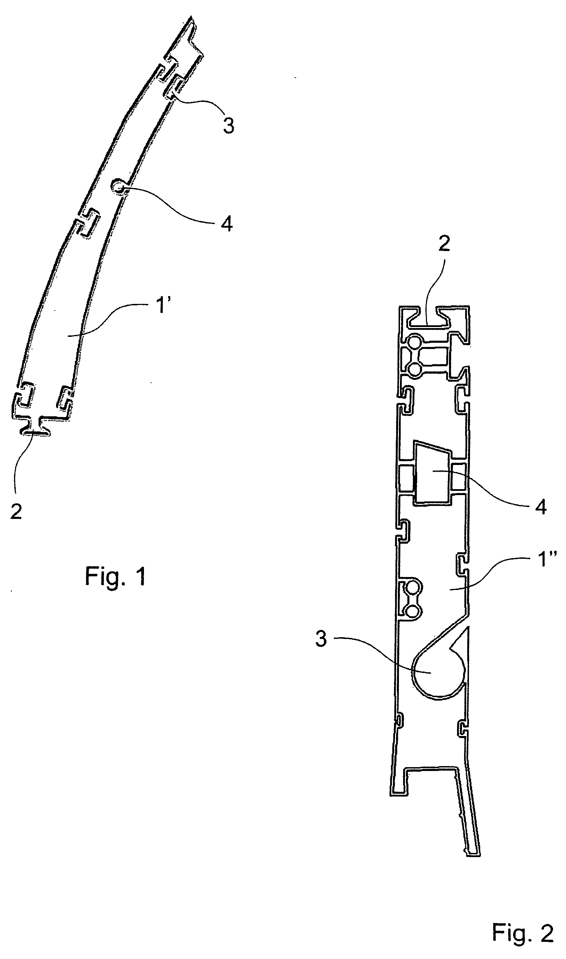

In den Zeichnungen zeigt die FIG. 1 einen Querschnitt durch ein oberes Säulenelement 1' einer B-Säule und FIG. 2 einen Querschnitt durch das untere Säulenelement 1" einer B-Säule.

In FIG. 1 ist mit dem Querschnitt auch schon das Rohprofil eines oberen Säulenelementes 1' einer B-Säule dargestellt. Zu erkennen ist hier der Einzug in Richtung der Dachinnenseite. Das Rohprofil kann so ausgebildet werden, daß es bereits die äußere sichtbare Oberfläche der späteren B-Säule bildet, es ist jedoch auch möglich, daß über Hinterschneidungen oder Hohlräume, in die Befestigungsmittel eingebracht werden können, eine Abdeckplatte aufgesetzt wird.

Im unteren Bereich weist das Säulenelement 1' Verbindungsmittel 2 auf, die hier von einem federartigen Fortsatz gebildet sind. Dieser kann in eine korrespondierende Nut 2 eines unteren Säulenelementes 1" eingesetzt werden, so daß sich zwischen beiden Bauteilen eine formschlüssige Verbindung ergibt.

Im seitlichen Bereich weist das Säulenelement 1' Hinterschneidungen 3 auf, in die beispielsweise Halterungen für Seitenairbags, Gurthalterungen, Halterungen für Innenraumabdeckungen oder ähnliche Bauteile eingesteckt werden können. Zusätzlich weist das Seitenelement Hohlräume 4 auf, die entweder zur weiteren Verstärkung oder auch zur Befestigung von vorderen bzw. hinteren Abdeckelementen dienen können.

In FIG. 2 ist das untere Säulenelement 1" der B-Säule dargestellt, die aus den beiden in den FIG. 1 und 2 dargestellten Säulenelementen 1', 1" aufgebaut werden kann. Dieses untere Säulenelement 1" weist im oberen Bereich wiederum ein Verbindungsmittel 2 auf, das hier korrespondierend als Nut ausgebildet ist. Zur Herstellung der Stützsäule kann das obere Säulenelement 1' in diese nutförmige Aufnahme des unteren Säulenelements 1" eingeschoben werden und anschließend verschweißt werden. Je nach Ausgestaltung des Abdeckelementes ist eine Verschweißung auch nicht notwendig, da das vordere und hintere Abdeckblech ein Verschieben der beiden Säulenelemente 1', 1" relativ zueinander verhindert.

Im unteren Säulenelement 1" besonders gut zu erkennen ist die Hinterschneidung 3 zur Aufnahme der Rolle des Sicherheitsgurtes. Oberhalb dieser Hinterschneidung ist ein Hohlraum oder eine Kammer 4 angeordnet, der zur Verstärkung des unteren Säulenelementes 1" dient. Zur weiteren Verstärkung kann dieser Hohlraum 4 mit einem Schaum oder mit einem sonstigen biegesteifen Material gefüllt werden, das im Unfallfalle die Biegesteifigkeit des Säulenelementes 1" weiter erhöht.

## Patentansprüche

1. Rahmen für eine Fahrzeugkarosserie, der auf einer Bodengruppe der Fahrzeugkarosserie aufgesetzt ist und auf jeder Seite in einer mit der Fahrtrichtung übereinstimmenden X-Richtung hintereinander angeordnet und die Dachkonstruktion tragend zwei oder mehr Stützsäulen aufweist, wobei die Stützsäulen einen aus Rohprofilen hergestellten, tragenden Grundkörper aufweisen,
**dadurch gekennzeichnet, daß**
zumindest einer der Grundkörper von im Extrusionsverfahren
hergestellten Rohprofilen (1) gebildet ist, die so angeordnet sind, daß sie vorwiegend in X-Richtung eine konstante Querschnittsform aufweisen.

2. Rahmen für eine Fahrzeugkarosserie nach dem vorhergehenden Anspruch,
**dadurch gekennzeichnet, daß**
in X-Richtung vorne und hinten angeordnete Stirnseiten des Grundkörpers mit Abdeckelementen zur Bildung eines geschlossenen Profilkörpers abgedeckt sind, wobei jedes der Abdeckelemente mit Rändern eines Rohprofils (1) verbunden ist.

3. Rahmen für eine Fahrzeugkarosserie nach einem der vorhergehenden Ansprüche,
**dadurch gekennzeichnet, daß**
der Grundkörper mehrteilig ausgebildet ist, wobei er übereinander angeordnet zumindest ein unteres Säulenelement (1") und ein oberes Säulenelement (1') aufweist und die Säulenelemente (1',1") an angrenzenden Stirnseiten untereinander verbunden sind.

4. Rahmen für eine Fahrzeugkarosserie nach dem vorhergehenden Anspruch,
**dadurch gekennzeichnet, daß**
die Säulenelemente (1',1") zur Bildung einer formschlüssigen Verbindung an den jeweils gegenüberliegenden Stirnseiten mit ineinander greifenden Verbindungsmitteln (2) versehen sind.

5. Rahmen für eine Fahrzeugkarosserie nach einem der beiden vorhergehenden Ansprüche,
**dadurch gekennzeichnet, daß**
die Stützsäulen paarweise gegenüberliegend angeordnet jeweils von einer C-Säule, einer B-Säule und/oder einer A-Säule gebildet sind, die jeweils ein oberes und ein unteres Säulenelement (1',1") aufweisen, wobei wenigstens ein Paar von gegenüberliegenden Stützsäulen Säulenelemente (1',1") mit gleichem Querschnitt aufweist.

6. Rahmen für eine Fahrzeugkarosserie nach dem vorhergehenden Anspruch,
**dadurch gekennzeichnet, daß**
auf jeder Seite der Karosserie das untere Säulenelement (1") der A-Säule die gleiche Form besitzt wie das untere Säulenelement (1") der B-Säule.

7. Rahmen für eine Fahrzeugkarosserie nach Anspruch 5 oder 6,
**dadurch gekennzeichnet, daß**
auf den gegenüberliegenden Seiten der Karosserie das untere Säulenelement (1") der gegenüberliegenden A-Säulen und das untere Säulenelement (1") der gegenüberliegenden B-Säulen die gleiche Form besitzen.

8. Rahmen für eine Fahrzeugkarosserie nach einem der Ansprüche 5, 6 oder 7,
**dadurch gekennzeichnet, daß**
auf jeder Seite der Karosserie das obere Säulenelement (1') der B-Säule die gleiche Form besitzt wie das obere Säulenelement (1') der C-Säule.

9. Rahmen für eine Fahrzeugkarosserie nach einem der Ansprüche 5 bis 8,
**dadurch gekennzeichnet, daß**
auf den gegenüberliegenden Seiten der Karosserie das obere Säulenelement (1') der gegenüberliegenden B-Säulen und das obere Säulenelement (1') der gegenüberliegenden C-Säulen die gleiche Form besitzen.

10. Rahmen für eine Fahrzeugkarosserie nach einem der vorhergehenden Ansprüche,
**dadurch gekennzeichnet, daß**
die Säulenelemente (1',1") zur Aufnahme von Befestigungen für Anbauteile an der dem Innenraum der Karosserie zugewandten Seite Hinterschneidungen (3) aufweisen, in die Anbauteile oder Befestigungsmittel zumindest mit einem verdeckten Teilbereich einsetzbar sind.

11. Rahmen für eine Fahrzeugkarosserie nach einem der vorhergehenden Ansprüche,
**dadurch gekennzeichnet, daß**
die Säulenelemente (1',1") im Inneren Kammern (4) aufweisen, die mit einem Verstärkungsmaterial, insbesondere einem Schaum ausgefüllt sind.

12. Rahmen für eine Fahrzeugkarosserie nach einem der vorhergehenden Ansprüche,
**dadurch gekennzeichnet, daß**
die vorderen und/oder hinteren Abdeckelemente zumindest partiell lichtdurchlässig ausgebildet sind, wobei im Inneren der Säulenelemente eine Lichtquelle angeordnet ist.

13. Rahmen für eine Fahrzeugkarosserie nach einem der vorhergehenden Ansprüche,
**dadurch gekennzeichnet, daß**
die Abdeckelemente in X-Richtung und in die entgegen gesetzte Richtung hervorspringende Mittelbereiche aufweisen, die eine Dichtfläche zur Anlage an einer inneren Türfläche bilden.

14. Verfahren zur Herstellung eines Rahmens für eine Fahrzeugkarosserie nach einem der vorhergehenden Ansprüche,
**dadurch gekennzeichnet, daß**
zunächst die Rohprofile durch Extrusion von großflächigen Profilen und anschließendes Abschneiden von Längsstreifen hergestellt werden, die Rohprofile mit vorderen und hinteren Abdeckungen versehen werden und mit einer Bodengruppe und dem Dach der Fahrzeugkarosserie verbunden werden.
